# EUROPÄISCHE PATENTSCHRIFT

(11) **EP 1 049 384 B1**
(45) Veröffentlichungstag und Bekanntmachung des Hinweises auf die Patenterteilung: **02.01.2004**
(21) Anmeldenummer: 99904805.1
(22) Anmeldetag: 22.01.1999
(51) Int. Cl.: A23J 3/16, A23J 3/08, A23L 1/305

(54) **VERFAHREN ZUR HERSTELLUNG EINES LEICHT VERDAULICHEN PROTEINKONZENTRATS, PROTEINREICHES NAHRUNGSMITTEL UND DESSEN VERWENDUNG**
METHOD FOR PRODUCING AN EASILY DIGESTIBLE PROTEIN CONCENTRATE, A PROTEIN-RICH FOOD ITEM AND ITS USE
PROCEDE PERMETTANT DE PRODUIRE UN CONCENTRE PROTEINIQUE FACILEMENT DIGESTIBLE, ALIMENT RICHE EN PROTEINES ET SON UTILISATION

(30) Priorität: 24.01.1998 DE 19802675
(43) Veröffentlichungstag der Anmeldung: 08.11.2000
(73) Patentinhaber: Trouillè, André, 29553 Bienenbüttel (DE)
(72) Erfinder: Trouillè, André, 29553 Bienenbüttel (DE)
(74) Vertreter: Vonnemann, Gerhard, Dr.-Ing.
(86) Internationale Anmeldenummer: PCT/EP1999/000429
(87) Internationale Veröffentlichungsnummer: WO 1999/037165

(56) Entgegenhaltungen:
- DE-A- 2 228 705
- DE-A- 2 853 194
- DE-A- 3 049 380
- DE-A- 3 207 505
- DATABASE WPI Section Ch, Week 8125 Derwent Publications Ltd., London, GB; Class D13, AN 81-44692D XP002100908 & JP 56 023865 A (NISSHIN OIL MILLS LTD) , 6. März 1981

## Beschreibung

Die Erfindung betrifft ein Verfahren zur Herstellung eines leicht verdaulichen Proteinkonzentrats, ein durch das Verfahren erhältliches proteinreiches Nahrungsmittel, sowie dessen Verwendung.

Der Mensch benötigt für einen ausgewogenen Stoffwechsel die Zufuhr essentieller Aminosäuren. Diese Aminosäuren können vom Körper nicht selbst synthetisiert werden und müssen daher in geeigneten Mengen über eine ausgewogene Ernährung aufgenommen werden. Herrscht ein ernährungsbedingter Mangel an einer oder mehreren der essentiellen Aminosäuren, führt dies zu Stoffwechselstörungen, wie z.B. Hyperlipidämie, Diabetes mellitus usw., sowie sekundär zum Hypertonus. Diese Störungen sind unter anderem auch Ursache des ernährungsbedingten Übergewichts.

Bei einer ausgewogenen Ernährung muß daher darauf geachtet werden, daß die essentiellen Aminosäuren in ausreichender Menge sowie im richtigen Verhältnis in der Nahrung vorhanden sind. Dies kann beispielsweise durch den Verzehr von tierischem Protein, wie Fisch, Fleisch, Wurst, Käse usw. erreicht werden. Nachteilig ist hierbei, daß neben den Proteinen meist auch größere Mengen an tierischem Fett aufgenommen werden, was besonders bei übergewichtigen Menschen unerwünscht ist.

Als Alternative wurde daher der Verzehr von pflanzlichem Eiweiß empfohlen. Als besonders geeignet haben sich dabei Soja und Sojaprodukte herausgestellt. Nach den Erläuterungen zum § 14a der Diätverordnung wird Protein aus Soja tierischem Protein in seiner Wertigkeit gleichgesetzt. Nachteilig an Soja ist jedoch, daß es nur schwer verdaulich ist. Es verursacht Blähungen, Völlegefühl, Magen- und Bauchspeicheldrüsenbeschwerden sowie Aufstoßen. Es ist daher erforderlich, das Soja vor dem Verzehr zu behandeln, um es dadurch für den Körper besser verdaulich zu machen. Dies kann durch Kochen, Backen oder Braten geschehen. Wegen der Empfindlichkeit der Aminosäuren gegenüber Wärme führt dies jedoch zu einem Verlust an Aminosäuren.

Ein weiterer Gesichtspunkt, unter dem der Wert eines Nahrungsmittels beurteilt wird, ist dessen Bioverfügbarkeit. Danach beurteilt sich, wie leicht der Körper die angebotenen Aminosäuren aufnehmen kann. Die mit der Nahrung aufgenommenen Proteine müssen nämlich zunächst verdaut werden. Sie werden dabei in kleinere Bruchstücke zerlegt, die dann vom Körper resorbiert werden. Die Fähigkeit des Körpers, die angebotene Nahrung zu verdauen, ist zwischen den verschiedenen Nahrungsmitteln sehr unterschiedlich ausgeprägt.

Wie bereits erwähnt, ist unbehandelte Soja sehr schwer zu verdauen. Man hat daher versucht, Soja durch Vermengung mit Honig bekömmlicher zu machen. In der DE 28 53 194 wird vorgeschlagen, mit Honig zu vermischen. Die Mischung wird stehen gelassen, wobei eine Volumenvergrößerung des Ausgangsmaterials beobachtet wird. Das auf diese Weise erhaltene Produkt ist pulverförmig bis körnig und kann entweder sofort als Nahrungsmittel eingesetzt werden oder durch Zugaben wie Aromen, Farbstoffen usw. weiterverarbeitet werden. Nachteilig an dem vorgeschlagenen Verfahren ist, daß es nur mit sehr geringen Mengen an Sojaprodukten (bis ca. 1 kg) durchführbar ist. Bei größeren Mengen ist eine Vermischung der Komponenten nicht möglich, da die Masse zu zähen Klumpen verklebt. Es wurden umfangreiche Versuche mit unterschiedlichen Mischern unternommen, die jedoch zu keinen befriedigenden Ergebnissen führten. Auch Versuche, Sojapulver und Honig in einem Trockenturm zu mischen schlugen fehl. Auf der Innenwand des Turms lagerte sich eine kandisartige Masse ab, die nur sehr schwierig zu entfernen war. Sie wies einen Honiganteil von mehr als 40 % auf und entsprach ca. 30 % der eingesetzten Menge an Ausgangsprodukten. Das restliche Produkt enthielt nur noch einen Honiganteil von 15 %. Das eingesetzte Sojaisolat war lediglich mit einer zuckrigen Masse überzogen. Eine innige Vermischung von Sojaisolat und Honig, wie sie in der DE 28 53 194 beschrieben wird, konnte nicht erreicht werden. Die Verdaulichkeit des erhaltenen Produkts war nicht zufriedenstellend. Auch waren die Misch- und Trocknungszeiten sehr lang, so daß wegen der damit verbundenen hohen Kosten das Verfahren für eine industrielle Anwendung ausschied.

Die Beigabe von Honig zur Haltbarmachung von Lebensmitteln ist beispielsweise aus der DE 30 49 380 bekannt. Es wird dort vorgeschlagen, Bienenprodukte, wie Blütenpollen, Bienenbrot, Propolis oder Honig mit Konzentraten aus Milch, Molke oder anderen Nebenprodukten der Milchindustrie homogen zu mischen, einzudampfen, zu trocknen und gegebenenfalls zu zerkleinern. Bei den erhaltenen Präparaten stehen die therapeutischen Wirkungen der Bienenprodukte im Vordergrund. Sie weisen daher einen hohen Anteil an Kohlehydraten auf. Der Aminosäureanteil liegt unter 20 %, so daß die Präparate als proteinhaltiges Nahrungsmittelkonzentrat ungeeignet sind.

Ebenso verhält es sich bei einem Nahrungskonzentrat, das in der DE 32 07 505 beschrieben wird. Zu seiner Herstellung werden Honig oder Honig im Gemisch mit anderen Bienenprodukten, mit einem hochwertigen Eiweißprodukt, Mineralstoffen, sowie gegebenenfalls Ballaststoffen und/oder Kohlenhydraten auf solche Weise vermischt, daß in dem erhaltenen Endprodukt mindestens 40 Gew.-% Honig enthalten sind. Als Beispiele für hochwertige Eiweißprodukte werden Milch-Albumine, Milchglobuline, das Retentat aus Ultrafiltration von Milch, Blutserum-Albumine und Blutserum-Globuline aus frischen Schlachtkörpern, Hühnereiweß, frisches Vollei, gefriergetrocknetes oder sprühgetrocknetes Ovoalbumin, Ovoglobulin und Ovovitellin, extrahierte Hefen, Fleischsaft und Fischsaft genannt. Auch bei diesen Präparaten ist der Kohlenhydratanteil sehr hoch. Bei der Zufuhr von Eiweiß werden daher weitere Nahrungsstoffe mit hohem Brennwert aufgenommen. Dies ist unerwünscht, wenn das Präparat als Ergänzungsnahrung, beispielsweise bei Abmagerungskuren, verzehrt wird.

In der PCT WO 95/29252 wird ebenfalls ein honighaltiges Nahrungsmittelkonzentrat vorgeschlagen. Bei der Herstellung wird das Produkt jedoch auf über 80°C erhitzt, so daß ein erheblicher Anteil der Aminosäuren deaktiviert wird.

Es ist daher Aufgabe der Erfindung ein Verfahren zur Herstellung eines leicht verdaulichen Proteinkonzentrats sowie ein mit dem Verfahren erhältliches proteinreiches Nahrungsmittelkonzentrat zur Verfügung zu stellen, das leicht in industriellen Mengen herzustellen und zu verarbeiten ist und eine hohe biologische Verfügbarkeit aufweist.

Zur Lösung der Aufgabe wird ein Verfahren vorgeschlagen, das die Schritte umfaßt:
Imprägnieren eines proteinreichen Ausgangsprodukts mit einem Emulgator;
Einrühren von Honig in das imprägnierte proteinreiche Ausgangsprodukt.

Überraschenderweise hat sich gezeigt, daß bei der Vermischung des imprägnierten proteinreichen Ausgangsprodukts keine Klumpenbildung eintritt. Es wird ein feines Pulver erhalten, das sofort als Lebensmittel verpackt werden kann oder problemlos zu weiteren Produkten verarbeitet werden kann. Die Ausgangskomponenten vermischen sich innerhalb kurzer Zeit innig miteinander. Dies ermöglicht auch eine rasche Reaktion ihrer Inhaltsstoffe. Während des Vermischens erhöht sich die Temperatur des Gemisches und sein Volumen nimmt zu. Es scheint ein Fermentationsprozess abzulaufen, durch den die Proteine des Ausgangsprodukts aufgeschlossen und damit leichter verdaulich werden. Überraschenderweise konnte im Nahrungsmittelkonzentrat erhebliche Anteile an freien Aminosäuren bzw. kurzkettiger Peptide nachgewiesen werden.

Als geeigneter Emulgator haben sich Lecithine erwiesen. Lecithine werden in der Nahrungsmittelindustrie schon lange verwendet. Bedenken hinsichtlich physiologischen Wirkung, insbesondere ihrer Abbaubarkeit während der Verdauung, bestehen daher nicht. Ferner werden Lecithine aus biologischen Quellen, z.B. Soja oder Eigelb, gewonnen. Das Nahrungsmittel wird also nur aus Stoffen biologischen Ursprungs hergestellt. Ein Zusatz von Stabilisatoren oder Konservierungsmitteln ist nicht erforderlich.

Um den Fett- und Kohlenhydratanteil gering zu halten hat es sich als günstig erwiesen, wenn das proteinreiche Ausgangsprodukt pflanzlichen Ursprungs ist, vorzugsweise Soja oder ein Sojaprodukt. Soja hat einen sehr hohen Proteingehalt, der in seiner biologischen Wertigkeit tierischem Eiweiß gleichgesetzt werden kann. Es wird ein Präparat erhalten, dessen hohe biologische Wirksamkeit in verschiedenen medizinischen Tests nachgewiesen werden konnte. Die normalerweise nach dem Verzehr von rohen Sojaprodukten beobachteten Verdauungsprobleme treten nicht auf.

Es ist jedoch auch möglich, daß das proteinreiche Ausgangsprodukt tierischen Ursprungs ist, vorzugsweise Milch oder ein Milchprodukt ist. Vorteilhaft enthält das Nahrungskonzentrat dann auch eine Vielzahl von Vitaminen und Mineralien, die in den tierischen Ausgangsprodukten enthalten sind. Geeignet ist beispielsweise Trockenmilchpulver. Es können jedoch auch andere Pulver tierischen Ursprungs, beispielsweise hergestellt aus Schlachtabfällen, verwendet werden.

Die besten Ergebnisse werden erhalten, wenn pflanzliches Ausgangsprodukt und tierisches Ausgangsprodukt im proteinreichen Ausgangsmaterial im Gemisch vorliegen. Die biologische Wertigkeit des Eiweißes kann erheblich gesteigert werden und liegt dann deutlich über der von Hühnereiweiß.

Die Vermischung von proteinreichem Ausgangsmaterial und Honig gelingt besonders innig, wenn der Honig flüssig ist und in sehr feinem Strahl, vorzugsweise aus mehreren Düsen, insbesondere drucklos, zugegeben wird. Die Mischzeiten können dadurch vorteilhaft verringert werden, was auch zu einer Senkung der Herstellkosten des Nahrungsmittelkonzentrats führt. Die Düsen können beispielsweise im Deckel des Mischers vorgesehen sein.

Es ist auch möglich, den Honig als wäßrige Lösung zuzugeben. Der Verdünnungsgrad wird dabei in Abhängigkeit vom gewünschten Feuchtigkeitsgehalt des Endprodukts gewählt.

Eine schonende Behandlung der im Ausgangsmaterial enthaltenen Proteine ist gewährleistet, wenn während des Einrührens des Honigs eine Temperatur von 60 °C nicht überschritten wird, vorzugsweise das Einrühren bei Raumtemperatur erfolgt. Im beanspruchten Temperaturbereich ist eine Denaturierung der Proteine nicht zu befürchten. Insbesondere die essentiellen Aminosäuren werden nicht desaktiviert.

Beim Mischen von proteinreichem Ausgangsmaterial und Honig wird eine Temperaturerhöhung im Gemisch beobachtet sowie eine Volumenvergrößerung. Es ist daher günstig, wenn nach dem Einrühren mehrere Stunden stehen gelassen wird, vorzugsweise über Nacht, um die Reaktionen der Inhaltsstoffe möglichst vollständig ablaufen zu lassen. Bereits während der Vermengung sowie beim weiteren Stehenlassen nimmt der Feuchtigkeitsgehalt des Gemisches ab. Es hat sich als günstig erwiesen das Gemisch bis zum Erreichen eines Feuchtigkeitsgehalt von vorzugsweise 1 bis 8 %, insbesondere 2 bis 5 %, stehen zu lassen. Es lassen sich dadurch auch Probleme vermeiden, die nach der Abpackung des Nahrungsmittelkonzentrats durch eine weiter Volumenvergrößerung auftreten. Unter Umständen kann die Verpackung sonst ausbeulen oder gar platzen. Günstig hat das Nahrungsmittel beim Abfüllen in Verpackungen einen Feuchtigkeitsgehalt von weniger als 5 %.

Ein besonders leicht verdauliches proteinreiches Nahrungsmittel wird erhalten, wenn der Honig in einem Anteil von 10 % bis 40 %, vorzugsweise 25 % bis 30 %, bezogen auf das Gewicht des Endprodukts, zugegeben wird. Der Anteil an Aminosäuren im Nahrungsmittel ist dann hoch, während der Anteil an Kohlenhydraten niedrig gehalten wird. Gleichzeitig wird mit dem angegebenen Honiganteil ein ausreichender Aufschluß der Proteine erreicht.

Die Vermischung von proteinreichem Ausgangsmaterial und Honig gelingt problemlos, wenn das Lecithin in einer Menge von 1 bis 6 %, vorzugsweise 2 bis 4 %, bezogen auf die Gesamtmenge, zugegeben wird. Vorteilhaft ist das erhaltene Nahrungsmittelkonzentrat dann auch in Getränken, beispielsweise Tee oder Kaffee, löslich.

Das proteinreiche Nahrungsmittelkonzentrat hat einen angenehmen Geschmack und ist ohne weitere Verarbeitung zum Verzehr geeignet. Es kann jedoch auch problemlos zu weiteren Produkten verarbeitet werden indem dem proteinreichen Nahrungsmittelkonzentrat Mineralien, Aromen, Vitamine, sowie übliche Nahrungsmittelhilfsstoffe zugegeben sind. Der Weiterverarbeitung sind dabei keine Grenzen gesetzt.

Mit dem Verfahren nach zumindest einem der Ansprüche 1 bis 12 kann ein Nahrungsmittelkonzentrat erhalten werden, das besonders vorteilhafte Eigenschaften hat. Es weist alle Aminosäuren auf, einschließlich der essentiellen Aminosäuren, und ist leicht verdaulich. Die Aminosäuren können vom Körper leicht resorbiert werden. Es ist besonders vorteilhaft, daß das Nahrungsmittelkonzentrat einen Eiweißanteil von mindestens 50 %, bezogen auf das Gesamtgewicht, aufweist, also eine hohe biologische Wirksamkeit als Ergänzungsmittel beispielsweise zur Therapie von Aminosäuremangelerscheinungen besitzt. Da das Eiweiß zu mindestens 40 % als freie Aminosäuren oder kurzkettige Peptide vorliegt, kann das Nahrungsmittelkonzentrat sehr leicht verdaut werden, weil die Proteine nicht zuerst von körpereigenen Enzymen gespalten werden müssen. Verdauungsprobleme treten folglich nicht auf. Durch die ausgewogene Zufuhr sämtlicher Aminosäuren läuft der Stoffwechsel gleichmäßiger ab. Störungen des Eiweißstoffwechsels, die beispielsweise Übergewicht verursachen, werden geheilt. Das Nahrungsmittelkonzentrat ist daher ideal als Ergänzungsnahrung während Abmagerungskuren, während der Rekonvaleszenz nach Krankheiten oder Operationen, als allgemeines Stärkungsmittel, z.B. für Sportler, usw. geeignet.

Das Nahrungsmittelkonzentrat ist besonders als diätetisches Nahrungsmittel, insbesondere zur Behandlung von Aminosäuremangelerkrankungen geeignet.

Die Erfindung wird in einer bevorzugten Ausführungsform unter Bezugnahme auf Ausführungsbeispiele beschrieben, wobei weitere vorteilhafte Einzelheiten den Beispielen zu entnehmen sind.

### 1. Allgemeine Vorschrift

Eine Mischung von 30 - 50 Gew.-% Sojaisolat (Proteinanteil 60 - 90 %) werden mit 25 - 45 Gew.-% tierischem Protein sowie Vitaminen, Mineralien und bei Bedarf weiteren Hilfsstoffen innig in einem an sich bekannten Vormischer vermischt. Das tierische Protein sollte möglichst pulverförmig sein. Ausgangsstoffe mit hohem Feuchtigkeitsgehalt, z.B. Quark, müssen vorher durch Pressen usw. getrocknet werden. Die erhaltene Proteinmischung wird anschließend in einer üblichen Anlage mit einer Lecithinlösung (3 - 8 % der Gesamtmenge) besprüht und intensiv durchmengt.. Zu der so erhaltenen imprägnierten Mischung wird in einem Mischer, der je nach Größe mehrere Düsen aufweist, Rohhonig in feinem Strahl drucklos zugegeben. Unter Rohhonig wird ein Honig verstanden, der nach dem Schleudern ohne weitere Behandlung möglichst umgehend zur Herstellung des Nahrungsmittelkonzentrats verwendet wird. Dadurch wird erreicht, daß eine möglichst hohe Aktivität der im Honig enthaltenen Enzyme gewährleistet ist. Die zugegebene Honigmenge entspricht etwa 25 - 30 Gew.-% der Gesamtmenge. Während der Zugabe erwärmt sich die Mischung deutlich. Auch bei niedrigen Raumtemperaturen ist ein Temperaturanstieg auf bis zu 40 °C zu beobachten. Gleichzeitig nimmt das Volumen der Mischung zu. Nach dem Mischvorgang wird ein rieselfähiges Pulver erhalten. Es weist keine Klumpen auf und kann entweder sofort verpackt oder zu weiteren Produkten verarbeitet werden.

### 2. Herstellungsbeispiel

### a) Herstellung der Proteinmischung:

290 kg Sojaisolat (Sojasolat) und 158 kg Buttermilchpulver werden in einem Vormischer vermischt und unter weiterem Mischen mit 2 kg Lecithinöl besprüht.

### b) Herstellung des Nahrungsmittelkonzentrats:

In einem Verwirbelungsmischer mit 800 kg Fassungsvermögen, in dessen oberer Innenseite 15 Düsen regelmäßig verteilt angeordnet sind, werden 450 kg der unter a) erhaltenen Proteinmischung vorgelegt. Anschließend werden unter intensivem Vermischen innerhalb von 10 Minuten 150 kg flüssiger Rohhonig drucklos in feinem Strahl zugegeben. Die Temperatur im Mischer erhöht sich auf ca. 39 °C. Gleichzeitig ist eine Volumenzunahme des Mischerinhalts um ca. 23 % zu beobachten. Nach Beendigung der Honigzugabe wird noch weitere 5 Minuten gemischt. Es wird ein gelbliches Pulver von leicht nussigem Geschmack erhalten, das einen Feuchtigkeitsgehalt von ca. 7 % aufweist. Die Ausbeute ist praktisch quantitativ.

Die Korngrößenverteilung des Pulvers ist in Tabelle 1 wiedergegeben. Die Korngrößenverteilung ist gleichmäßig fein. Der Anteil von Körnern mit einer Größe von > 1,0 mm ist mit 3,8 % gering. Die Bildung von größeren Klumpen wurde nicht beobachtet. Das Pulver kann problemlos aus dem Mischer entnommen werden.

**Tabelle 1**

| Korngrößenverteilung des Nahrungsmittelkonzentrats | |
|---|---|
| mm | % |
| > 1,0 | 3,8 |
| > 0,5 | 12,2 |
| > 0,25 | 26,0 |
| > 0,09 | 20,2 |
| > 0,063 | 11,4 |
| < 0,063 | 26,4 |

Die während des Vermischens beobachtete Erwärmung führt nicht zu einer Zerstörung insbesondere der essentiellen Aminosäuren. Die Werte einer Aminosäurebestimmung des Nahrungsmittelkonzentrats sind in Tabelle 2 zusammengefaßt.

**Tabelle 2:**

| Aminosäuregehalt des Nahrungsmittelkonzentrats | |
|---|---|
| Aminosäure | g/100g |
| Alanin | 1,9 |
| Arginin | 3,8 |
| Asparaginsäure | 6,1 |
| Cystein | 3,5 |
| Glutaminsäure | 10,6 |
| Glycin | 2,9 |
| Histidin | 1,1 |
| Isoleucin | 1,2 |
| Leucin | 4,7 |
| Lysin | 3,1 |
| Methionin | 2,1 |
| Phenylalanin | 3,1 |
| Prolin | 2, 6 |
| Serin | 5,7 |
| Threonin | 2,3 |
| Tryptophan | 0,30 |
| Tyrosin | 2,7 |
| Valin | 2,4 |

Das Pulver kann unmittelbar nach Beendigung des Mischvorgangs verpackt werden. Dabei sollten die Behälter jedoch nur bis zu 75 % ihres Fassungsvermögens befüllt werden, da die Volumenvergrößerung des proteinreichen Nahrungsmittelkonzentrats noch einige Zeit fortläuft. Bei einer Lagerung in gasdichten Dosen nimmt der Feuchtigkeitsgehalt des Konzentrats im Lauf der Zeit bis auf ca. 2 % ab.

### 2. Biologische Aktivität

### Beispiel 1:

Jedem Tier einer Gruppe von Ratten wurde über einen Zeitraum von 6 Wochen eine Menge von 10 g/Tag des mit Herstellungsbeispiel 2 erhaltenen Nahrungsmittelkonzentrats verabreicht. Die Tiere hatten zusätzlich ungehinderten Zugang zu normalem Trockenfutter. Eine Kontrollgruppe erhielt lediglich gewöhnliches Trockenfutter.

Die Tiere wurden geschlachtet und Gewebeschnitte unter einem Elektronenmikroskop bei 20.000-facher Vergrößerung untersucht. Die Stärke der die Zellen umgebenden Fettschicht war im Vergleich zur Kontrollgruppe bei den mit Nahrungsmittelkonzentrat behandelten Tieren deutlich geringer. Das Nahrungsmittelkonzentrat wirkt sich positiv auf den Stoffwechsel der behandelten Tiere aus.

### Beispiel 2:

Eine Gruppe von 33 Diabetikern, die sämtlich übergewichtig waren, wurde das Nahrungsmittelkonzentrat nach Herstellungsbeispiel 2 beginnend mit einer Dosis von einem 'Teelöffel pro Tag verabreicht. Die Dosis wurde langsam auf 60 Gramm pro Tag gesteigert und jeweils 15 Minuten vor dem Essen eingenommen. Es konnte bei allen Testteilnehmern eine signifikante Absenkung des Blutzuckerspiegels erreicht werden. Auch bei schwierig einzustellenden Patienten konnte außerdem eine Stabilisierung des Blutzuckerspiegels beobachtet werden. Die Fähigkeit, sich zu konzentrieren, nahm nach Aussage der Probanden zu. Verdauungsprobleme, wie sie normalerweise beim Verzehr von rohen Sojaprodukten auftreten, konnten nicht beobachtet werden.

### Beispiel 3:

Einer Gruppe von 5 Spring- und 6 Dressurpferden wurden zusätzlich zum normalen Futter über einen Zeitraum von 6 Monaten eine Menge von 5 bis 6 Eßlöffeln pro Tag des Nahrungsmittelkonzentrats nach Herstellungsbeispiel 2 verabreicht.

Die Tiere zeigten über den Verlauf der Tuniersaison eine deutlich erhöhte psychische Belastbarkeit und Konzentrationsfähigkeit. Die Beschaffenheit der Muskulatur blieb im Verlauf der Saison gleichmäßig gut. Auch die Bildung von Verdickungen an den Beinen oder ein vermehrter Gallenfluß, wie er gewöhnlich bei der Verabreichung von proteinreicher Nahrung auftritt, konnte nicht beobachtet werden.

## Patentansprüche

1. Verfahren zur Herstellung eines leicht verdaulichen Proteinkonzentrats **gekennzeichnet durch** die Schritte:
Imprägnieren eines proteinreichen Ausgangsprodukts mit einem Emulgator;
Einrühren von Honig in das imprägnierte proteinreiche Ausgangsprodukt.

2. Verfahren nach Anspruch 1, **dadurch gekennzeichnet, daß** der Emulgator Lecithin ist.

3. Verfahren nach Anspruch 1 oder 2, dadurch gekennzeichent, daß das proteinreiche Ausgangsprodukt pflanzlichen Ursprungs ist, vorzugsweise Soja oder ein Sojaprodukt, insbesondere mit einem Proteinanteil von 60 bis 95 %.

4. Verfahren nach Anspruch 1 oder 2, **dadurch gekennzeichnet, daß** das proteinreiche Ausgangsprodukt tierischen Ursprungs ist, vorzugsweise Milch oder ein Milchprodukt ist.

5. Verfahren nach Anspruch 1, 2, 3 oder 4, **dadurch gekennzeichnet, daß** pflanzliches Produkt und tierisches Produkt im proteinreichen Ausgangsmaterial im Gemisch vorliegen.

6. Verfahren nach Anspruch 1, 2, 3, 4 oder 5, **dadurch gekennzeichnet, daß** der Honig flüssig ist und in sehr feinem Strahl, vorzugsweise aus mehreren Düsen, insbesondere drucklos, zugegeben wird.

7. Verfahren nach Anspruch 1, 2, 3, 4, 5, oder 6, **dadurch gekennzeichnet, daß** der Honig als wäßrige Lösung zugegeben wird.

8. Verfahren nach Anspruch 1, 2, 3, 4, 5, 6 oder 7, **dadurch gekennzeichnet, daß** während des Einrührens des Honigs eine Temperatur von 60 °C nicht überschritten wird, vorzugsweise das Einrühren bei Raumtemperatur erfolgt.

9. Verfahren nach Anspruch 1, 2, 3, 4, 5, 6, 7 oder 8, **dadurch gekennzeichnet, daß** nach dem Einrühren mehrere Stunden stehen gelassen wird, vorzugsweise bis zum Erreichen eines Feuchtigkeitsgehalts von 1 bis 8 %, insbesondere 2 bis 5 %.

10. Verfahren nach Anspruch 1, 2, 3, 4, 5, 6, 7, 8 oder 9, **dadurch gekennzeichnet, daß** der Honig in einem Anteil von 10 % bis 40 %, vorzugsweise 25 % bis 30 %, bezogen auf die Gesamtmenge, zugegeben wird.

11. Verfahren nach zumindest einem der vorhergehenden Ansprüche, **dadurch gekennzeichnet, daß** das Lecithin in einer Menge von 1 bis 6 %, vorzugsweise 2 bis 4 %, bezogen auf die Gesamtmenge, zugegeben wird.

12. Verfahren nach zumindest einem der vorhergehenden Ansprüche, **dadurch gekennzeichnet, daß** dem proteinreichen Nahrungsmittelkonzentrat Mineralien, Aromen, Vitamine, sowie übliche Nahrungsmittelhilfsstoffe zugegeben sind.

13. Proteinreiches Nahrungsmittelkonzentrat erhältlich durch das Verfahren nach zumindest einem der Ansprüche 1 bis 12, **dadurch gekennzeichnet, daß** es einen Eiweißanteil von mindestens 50 %, bezogen auf das Gesamtgewicht, aufweist.

14. Proteinreiches Nahrungsmittelkonzentrat nach Anspruch 13, **dadurch gekennzeichnet, daß** das Eiweiß zu mindestens 40 % als freie Aminosäuren oder kurzkettige Peptide vorliegt.

## Claims

1. A method for manufacturing an easily digestible protein concentrate, **characterised by** the steps:
impregnating a protein-rich starting product with an emulsifier;
stirring honey into the impregnated protein-rich starting product.

2. A method according to claim 1, **characterised in that** the emulsifier is lecithin.

3. A method according to claim 1 or claim 2, **characterised in that** the protein-rich starting product is of a vegetable origin, preferably soya or a soya product, in particular with a protein constituent part of 60 to 95 %.

4. A method according to claim 1 or 2, **characterised in that** the protein-rich starting product is of an animal origin, preferably is a milk or milk product.

5. A method according to claim 1, 2, 3, or 4, **characterised in that** the vegetable product and animal product are presented in mixture in the protein-rich starting material.

6. A claim according to claim 1, 2, 3, 4, or 5, **characterised in that** the honey is fluid and is added in a very fine jet, preferably from several nozzles, in particular without pressure.

7. A method according to claim 1, 2, 3, 4, ,5 or 6, **characterised in that** the honey is added as an aqueous solution.

8. A method according to claim 1, 2, 3, 4, 5, 6, or 7, **characterised in that** during the stirring-in of the honey a temperature of 60° is not exceeded, preferably the stirring-in occurs at room temperature.

9. A method according to claim 1, 2, 3, 4, 5, 6, 7, or 8, **characterised in that** after the stirring-in one leaves standing for several hours, preferably until reaching a moisture content of I to 8 %, in particular 2 to 5 %.

10. A method according to claim 1, 2, 3, 4, 5, 6, 7, 8 or 9, **characterised in that** the honey is added in a constituent part of 10 % to 40 %, preferably 25 % to 30 % with respect to the total quantity.

11. A method according to at least one of the preceding claims, **characterised in that** the lecithin is added in a quantity of 1 to 6 %, preferably 2 to 4 % by weight with respect to the total quantity.

12. A method according to at least one of the preceding claims, **characterised in that** minerals, aromas, vitamins as well as usual foodstuff auxiliary substances are added to the protein-rich foodstuff concentrate.

13. A protein-rich foodstuff concentrate obtainable by the method according to at least one of the claims 1 to 12, **characterised in that** it has a protein constituent part of at least 50%, with respect to the total weight.

14. A protein-rich foodstuff concentrate according to claim 13, **characterised in that** the protein is present to at least 40 % as free amino acids or short-chained peptides.

## Revendications

1. Procédé de production d'un concentré de protéine facile à digérer, **caractérisé par** les étapes consistant à :
imprégner d'un émulsifiant un produit de départ riche en protéines ;
mélanger du miel au produit de départ riche en protéines imprégné.

2. Procédé selon la revendication 1, **caractérisé par le fait que** l'émulsifiant est de la lécithine.

3. Procédé selon la revendication 1 ou 2, **caractérisé par le fait que** le produit de départ riche en protéines est d'origine végétale, de préférence du soja ou un produit à base de soja, en particulier avec une proportion de protéine de 60 à 95%.

4. Procédé selon la revendication 1 ou 2, **caractérisé par le fait que** le produit de départ riche en protéines est d'origine animale, de préférence du lait ou un produit laitier.

5. Procédé selon la revendication 1, 2, 3 ou 4, **caractérisé par le fait que** du produit végétal et du produit animal sont présents en mélange dans la matière de départ.

6. Procédé selon la revendication 1, 2, 3, 4 ou 5, **caractérisé par le fait que** le miel est liquide et est ajouté selon un très fin jet, de préférence à partir de plusieurs tuyères, en particulier sans pression.

7. Procédé selon la revendication 1, 2, 3, 4, 5 ou 6, **caractérisé par le fait que** le miel est ajouté sous forme de solution aqueuse.

8. Procédé selon la revendication 1, 2, 3, 4, 5, 6 ou 7, **caractérisé par le fait que**, pendant l'ajoute sous agitation du miel, il n'est pas excédé une température de 60°C, de préférence que l'ajoute sous agitation s'effectue à température ambiante.

9. Procédé selon la revendication 1, 2, 3, 4, 5, 6, 7 ou 8, **caractérisé par le fait qu'**après l'ajoute sous agitation, on laisse reposer pendant plusieurs heures, de préférence jusqu'à obtenir une teneur en humidité de 1 à 8 %, en particulier de 2 à 5 %.

10. Procédé selon la revendication 1, 2, 3, 4, 5, 6, 7, 8 ou 9, **caractérisé par le fait que** le miel est ajouté en une proportion de 10 % à 40 %, de préférence de 25 % à 30 %, sur base de la quantité totale.

11. Procédé selon au moins l'une des revendications précédentes, **caractérisé par le fait que** la lécithine est ajoutée en une quantité de 1 à 6 %, de préférence de 2 à 4 %, sur base de la quantité totale.

12. Procédé selon au moins l'une des revendications précédentes, **caractérisé par le fait qu'**au concentré de produit alimentaire riche en protéines sont ajoutés des minéraux, des arômes, des vitamines, ainsi que des produits auxiliaires habituels pour les produits alimentaires.

13. Concentré de produit alimentaire riche en protéines pouvant être obtenu par le procédé selon au moins l'une des revendications 1 à 12, **caractérisé par le fait qu'**il présente une proportion d'albumine d'au moins 50 %, sur base du poids total.

14. Concentré de produit alimentaire riche en protéines selon la revendication 13, **caractérisé par le fait que** l'albumine est présente au moins pour 40 % sous forme d'acides aminés libres ou de peptides à chaîne courte.
